Europäisches Patentamt

European Patent Office

Office européen des brevets

(11) Publication number: **0 075 802**
**A2**

(12) # EUROPEAN PATENT APPLICATION

(21) Application number: **82108595.8**

(22) Date of filing: **17.09.82**

(51) Int. Cl.³: **F 02 D 5/02**

(30) Priority: **24.09.81 JP 149574/81**

(43) Date of publication of application:
**06.04.83 Bulletin 83/14**

(84) Designated Contracting States:
**CH DE FR GB IT LI NL SE**

(71) Applicant: **Hitachi, Ltd.**
**5-1, Marunouchi 1-chome**
**Chiyoda-ku Tokyo 100(JP)**

(71) Applicant: **Hitachi Automotive Engineering Co., Ltd.**
**3085-5, Nishifuruuchi Higashiishikawa**
**Katsuta-shi Ibaraki-ken(JP)**

(72) Inventor: **Hoshi, Yoshikazu**
**2650-62, Muramatsu Toukai-mura**
**Naka-gun Ibaraki-ken(JP)**

(72) Inventor: **Sano, Yukinori**
**23-1, Ishikawa-cho**
**Katsuta-shi Ibaraki-ken(JP)**

(72) Inventor: **Hirayama, Susumu**
**1016, Tabiko Katsuta-shi**
**Ibaraki-ken(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) Method and apparatus for controlling fuel injection pump.

(57) According to the present invention, control parameters for the amount of fuel to be injected and the fuel injection timing respectively are derived from the fuel injection command from an accelerator pedal and operation parameters fed back from an engine, and control quantities are calculated from the operation parameters for controlling actuators (11, 16) so that there are no differences between the actually controlled quantities fed back from the actuators (11, 16) and the calculated control quantities respectively.

*FIG. 1*

SPECIFICATION

TITLE OF THE INVENTION

METHOD AND APPARATUS FOR CONTROLLING FUEL

INJECTION PUMP

BACKGROUND OF THE INVENTION

Field of the Invention:

The present invention relates to a method and an apparatus for controlling a fuel injection pump for internal combustion engines, and more particularly, to an apparatus for controlling a fuel injection pump in which the fuel injection timing is determined according to the axial position of a spill ring and the amount of fuel to be injected is determined according to the revolving direction of the spill ring.

Description of the Prior Art:

As typified by a fuel injection pump for diesel engines, it is necessary to suitably determine the fuel injection conditions of a fuel injection pump which injects fuel into a cylinder. The reason for this is apparent from a demand for improvement in economy and a demand for reduction in the amount of noxious components in exhaust gas.

Also in recent gasoline engines, there is a need for cylinder injection in order to form a laminar air-fuel mixture for improvement in fuel consumption and to enable a low-quality fuel to be used. Therefore, such gasoline engines are also required to suitably determine the injection conditions similarly to diesel engines.

In a typical conventional apparatus for controlling fuel injection pumps, an actuator is mechanically operated. Since a large force is necessary for such operation, there is a need for a large-sized driving device, such as a hydraulic servo system or the like. Moreover, since the control thereby is mechanically effected, the control is insufficient from viewpoints of fuel economy and noxious components in exhaust gas.

On the other hand, such a controlling apparatus has been proposed as having an actuator electrically operated. This controlling apparatus, however, cannot satisfy the complicated fuel injection conditions of engines either. As a prior art of this type, an engine governor by BARBER COLMAN COMPANY is reported in "DIESEL & GAS TURBINE WORLDWIDE CATALOG vol. 44 (1979)" (pp. 1214 - 1217). However, the engine governor is still insufficient because it controls only the

- 3 -

**0075802**

amount of fuel to be injected.

SUMMARY OF THE INVENTION

It is, therefore, an object of the present invention to provide an apparatus and method for controlling a fuel injection pump thereby to suitably control fuel injection conditions.

Another object of the present invention is to provide a fuel injection pump wherein fuel injection conditions are suitably controlled.

To these end, according to the present invention, control parameters for controlling actuators which determine the amount of fuel to be injected from a fuel injection device and the fuel injection timing respectively are derived according to operation parameters representing the operating conditions of an engine. Then, the control quantity of each of the actuators is calculated from the control parameters and moreover the actually operated quantity of each of the actuators is detected from the control parameters, for controlling each of the actuators so that there is no difference between the operated quantity and the control quantity of the actuator.

BRIEF DESCRIPTION OF THE DRAWINGS

Fig. 1 is a sectional view of a fuel injection pump according to the present invention;

Fig. 2 illustrates the operation of a spill ring according to the present invention;

Fig. 3 illustrates the positional relationship between a spill ring and a notch of a plunger according to the present invention;

Fig. 4 is a sectional view of an actuator for controlling the amount of fuel to be injected and a position sensor according to the present invention;

Fig. 5 is a block diagram of a computer according to the present invention;

Fig. 6 is a block diagram for illustrating the function of the computer;

Fig. 7, Fig. 8 and Fig. 9 are block diagrams for illustrating the control of the amount of fuel to be injected, respectively;

Fig. 10 is a flow chart of the block diagram shown in Fig. 9;

Fig. 11 is a block diagram for illustrating the injection timing control according to the present invention;

Fig. 12 is a flow chart of the block diagram shown in Fig. 11;

Fig. 13 shows a map data about the relationship between the amount of fuel to be injected and the revolution number;

Fig. 14 is a flow chart for obtaining the amount of fuel to be injected from the map data shown in Fig. 13;

Fig. 15 shows a map data about the relationship between the revolution number and the fuel injection timing;

Fig. 16 is a flow chart for obtaining the fuel injection timing from the map data shown in Fig. 15;

Fig. 17 shows a three-dimensional map data about the relationship among the revolution number, the amount of fuel to be injected and the fuel injection timing;

Fig. 18 is a flow chart for obtaining the fuel injection timing from the map data shown in Fig. 17;

Fig. 19 shows the relationship between the intake air pressure and a coefficient for correcting the amount of fuel to be injected;

Fig. 20 shows the relationship between the engine temperature and the coefficient for correcting the amount of fuel to be injected;

Fig. 21 shows the relationship between the engine temperature and the idling revolution number; and

Fig. 22 shows the relationship between the engine temperature and a coefficient for correcting the fuel injection timing.

DETAILED DESCRIPTION OF THE PREFERRED EMBODIMENTS

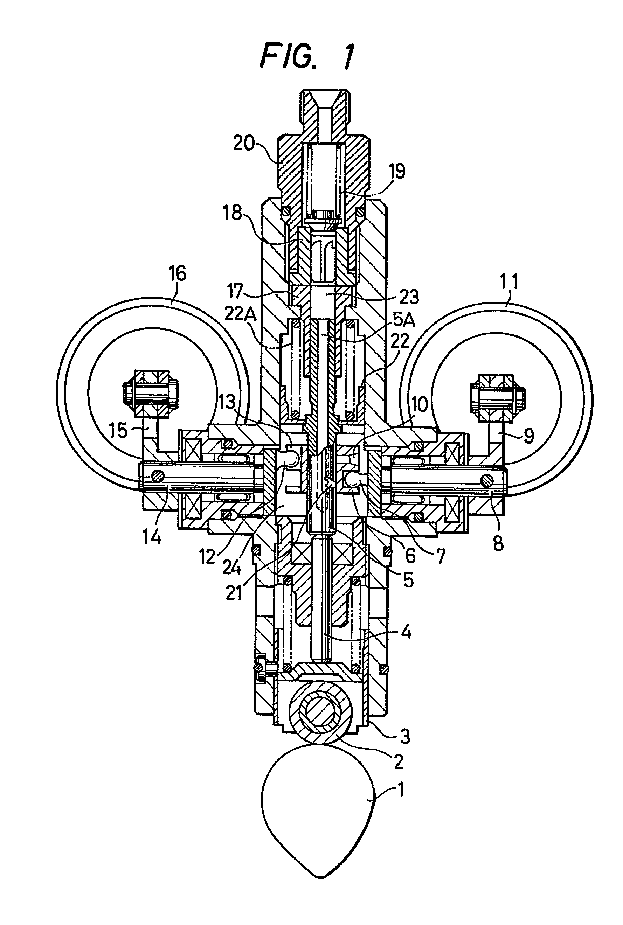

The structures and operations of a fuel injection pump and actuators which vary the amount of fuel to be injected and the fuel injection timing, respectively, will be described hereinunder with reference to Fig. 1 thru Fig. 4.

In Fig. 1, a cam 1 driven in accordance with an engine vertically moves a roller 2 held by a tappet 3 mounted on the pump main body and adapted to be capable of only reciprocation, thereby allowing the tappet 3 and the rod 4 to be also vertically moved.

The rod 4 is abutted against a plunger 5, so that the plunger 5 is also vertically moved by the rod 4. Here, the plunger 5 is secured integrally with a guide 22, receiving a downward force applied by means of a spring 22A disposed inside the guide 22.

The plunger 5 is received by a barrel 17 with a gap of several microns so as to be substantially oiltight. A delivery valve 19 and a valve seat 18 are disposed in the upper part of the barrel 17 and closely contacted with each other by means of a valve holder 20.

A tubular hollow 5A is provided in the center of the plunger 5, and a high-pressure chamber 23 is defined by the barrel 17 and the plunger 5.

A spill ring 6 is slidably engaged with a notch 21 provided in the outer surface of the plunger 5 so that the notch 21 is inclined with respect to the axial direction of the plunger 5. The spill ring 6 is provided with a spill port 10 and adapted to be able to axially and circumferentially change its position with respect to the plunger 5.

An actuator 11 for controlling the fuel injection timing is engaged with a lever 9 and adapted to rotate a shaft 8 by a given angle. A ball end 7 eccentrically provided to the shaft 8 is slidably engaged with an annular groove of the spill ring 6 so as to vertically move the spill ring 6 along the axial direction of the plunger 5 according to the pivotal swing of the lever 9.

An actuator 16 for controlling the amount of fuel to be injected causes a shaft 14 to pivotally swing through a lever 15. A ball end 12 provided eccentrically with the shaft 14 is slidably engaged with a vertical groove 13 provided to the spill ring 6 so as to revolve the spill ring 6 around the plunger 5 according to the pivotal swing of the shaft 14.

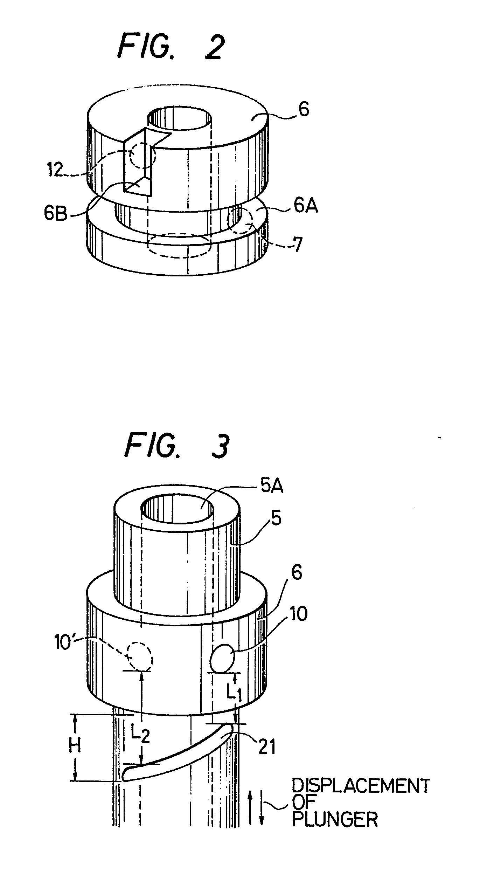

Fig. 2 schematically illustrates the operation of the spill ring 6. When the shaft 8 rotates, the ball end 7 engaged with the annular groove 6A rotates, causing the spill ring 6 to be axially displaced. When the shaft 14 rotates, the ball end 12 engaged with the vertical groove 6B rotates, causing the spill ring 6 to be circumferentially displaced. When the ball end 7 is fixed, the spill ring 6 is displaced only in the circumferential direction. On the other hand, when the ball end 12 is fixed, the spill ring 6 is displaced only in the axial direction. Both displacements can be performed independently of each other.

Referring to Fig. 1 again, fuel is introduced into an oil delivery chamber 24 under a proper pressure by means of an oil delivery pump (not shown). When the cam 1 causes the roller 2, the tappet 3, the rod 4 and the plunger 5 to move downwardly and the notch 21 is released from the lower end of the spill ring 6, the portion from the notch 21 to the high-pressure chamber 23 is filled with the fuel.

Next, when the inclined notch 21 is closed by the lower end of the spill ring 6 in accordance with the rotation of the cam 1, the pressure of the fuel in the high-pressure chamber 23 is raised as the plunger 5 moves upward.   When the plunger 5 is displaced by a proper amount, the delivery valve 19 is opened, so that the fuel is injected into a cylinder through both a pipe connected to the upper part of the valve holder 20 and an injection valve communicated with the pipe.

The injection of fuel progresses as the plunger 5 moves upward.   When the notch 21 finally coincides with the spill port 10, the fuel in the high-pressure chamber 23 is allowed to overflow into the oil delivery chamber 24 through the passage inside the plunger 5.

Fig. 3 illustrates the positional relationship among the spill ring 6, the spill port 10 formed in the spill ring 6 and the notch 21 provided to the plunger 5.   In Fig. 3, the smaller the height H of the notch 21 closed by the spill ring 6, the earlier the pressure of the fuel in the high-pressure chamber 23 becomes high, and consequently the earlier is the timing of starting injection of fuel. On the other hand, a distance $L_1$ between the spill port 10 and the notch when the spill port 10 is at a position shown by a solid line is shorter than a distance $L_2$ therebetween when the spill port 10 is at a position 10' shown by a broken line. Accordingly, the fuel injection time is longer and the amount of fuel to be injected is larger when the spill port 10 is at the position 10'. Therefore, the lower the position of the spill ring 6, the earlier the starting timing of injection of fuel; the longer the effective stroke of the notch 21 from the closing of the notch 21 by the spill ring 6 to the coincidence of the notch 21 with the spill port 10, the larger the amount of fuel to be injected. In other words, the fuel injection timing is controlled according to the position of the lever 9, while the amount of fuel to be injected is controlled according to the position of the lever 15.

Here, since the spill ring 6 receives only its own weight and the frictional force between the spill ring 6 and the plunger 5, supporting the shafts 8, 14 with needle bearings or the like permits both the amount of fuel to be injected and the fuel injection timing to be controlled by means of actuators with extremely small operating forces. This is preferable for allowing such controls to be electronically effected.

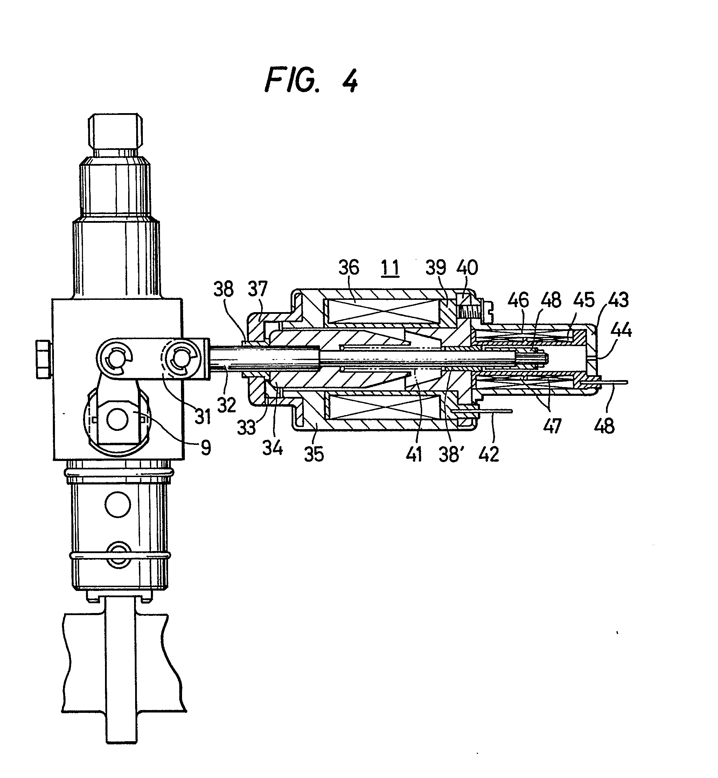

Fig. 4 shows preferred embodiments of the actuator for controlling the fuel injection timing and a position sensor respectively. Also the actuator for controlling the amount of fuel to be injected and the position sensor associated therewith have similar arrangements.

Since the control lever 9 pivotally moves, it is connected with the end of a rod 32 of the actuator 11 which rectilinearly moves, through a link 31 so as not to interfere with the movement of the rod 32. The rod 32 is secured to an armature 34, which forms a magnetic circuit together with a coil 36 contained in a yoke 35, the yoke 35 and a fixed magnetic pole 40. The attraction force applied to the armature 34 varies with an average value of the rectangular current supplied to the coil 36, and the position of the rod 32 is determined by the balancing between the attraction force and the resilient force of a spring 41 contained therein. In stead of the spring 41, a repulsion force may be applied from the outside of the actuator 11. The axial operation of the rod 32 is guided by means of two guides 38 and 38' supported by the fixed magnetic pole 40 and a guide holder 37, thereby to obtain a smooth movement. A vent hole 33 is provided to the guide holder 37 in order to cope with the change in the internal volume due to the movement of the rod 32 and the armature 34.

Properly selecting the dimension of the vent 33 permits the same to function also as a damper for the operation of the rod 32 and the armature 34.

As descrived already, since the amount of fuel to be injected or the fuel injection timing is determined only by the position of the control lever 9 without being affected other factors, it is necessary to provide a position detector for confirming that the position coincides with a desired value. It is, however, not always necessary to restrict such a detector to detection of the position of the lever 9, and the end can be attained by detecting the actual position of the

- 13 -

0075802

movable part of the actuator 11.

If the actuator 11 for controlling the lever position and the position detector are mounted separately from each other, it becomes difficult to accurately regulate the relationship among the three, i.e., the lever position, the actuator and the position detector. On the other hand, if a detector for detecting the movement of the actuator 11 is integrally formed and previously regulated, it suffices only to regulate the connection between the position of the lever 9 and the actuator 11. Accordingly, the interchangeability and productivity of the parts improve and at the same time, the mounting of the actuator 11 to the injection pump and the regulation thereof can be simplified. From the above-mentioned viewpoints, the actuator 11 and the position sensor are integrally formed according to the preferred embodiment.

A sensor yoke 43 is screwed to the fixed magnetic pole 40 of the actuator 11, and a coil bobbin 45 is held inside the yoke 43. The coil wound on the coil bobbin comprises two secondary coils 47 and a primary coil 46 wound outside the two coils constituting an inner layer in order to

0075802

form a differential transformer. The reason why the primary coil 46 and the secondary coils 47 are wound in two layers is to decrease the length of the sensor. This is, however, not exclusive and such an arrangement may be employed that the primary coil 46 is disposed in the center and the two secondary coils 47 are disposed on both sides thereof, like ordinary differential transformers. The primary coil 46 is supplied with current from an exciter device (not shown). The phase and magnitude of the voltage induced in the two secondary coils 47 vary in accordance with the position of a variable member 48 engaged on the axis of the rod 32. The position of the rod 32 can be made known by differentially processing the phase and magnitude of the induced voltage in a processing circuit (not shown). In other words, it is possible to know the actual value of the amount of injected fuel or the fuel injection timing. A vent hole 44 is provided also to the sensor yoke 43 so as to cope with the change in the internal volume. Here, if a rectangular current having two states, i.e., flowing and cutoff, is supplied to the coil 36 of the actuator 11, the electric loss in the current-regulating

- 15 -

0075802

part can be favorably reduced.

Although the above description applies in case of one-cylinder pump, it is apparent that in case of a plurality of cylinders, each of the amount of fuel to be injected and the injection timing can be controlled with a single actuator with respect to the whole cylinders of an engine by allowing above-mentioned type control levers to interlock with each other. Moreover, the position sensor can be made practical through the detection of resistance, variable capacitance or the like in addition to the above-mentioned detection.

A computer and peripheral circuits thereof for controlling the actuators 11, 16 will be described hereinunder.

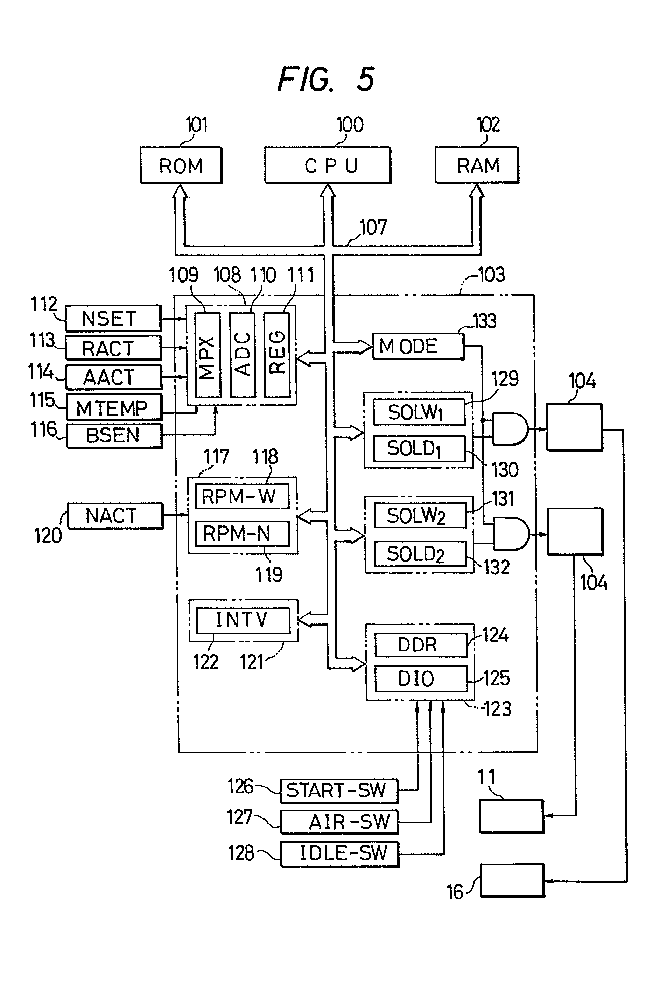

In Fig. 5, the computer comprises a central processing unit (CPU) 100, a read-only memory (ROM) 101, a random-access memory (RAM) 102, an input/output circuit (I/O circuit) 103 and a drive circuit 104. The CPU 100 receives data about the engine and those concerned to the same from various programs stored in the ROM 101 and the I/O circuit 103 and carries out operations while following the procedure according to the programs.

Then, the CPU 100 delivers the results to the I/O circuit 103 and moreover applies control signals to the actuator 16 for controlling the amount of fuel to be injected and the actuator 11 for controlling the fuel injection timing respectively through the drive circuit 104. Intermediate data needed for these operations are stored in the RAM 102, and the transfer of various data among the CPU 100, the ROM 101, the RAM 102 and the I/O circuit 103 is conducted through a bus line 107 comprising a data bus, an address bus and a control bus.

The function of the I/O circuit 103 will be described hereinunder.

Fed to an A/D converter 108 is an analog signal from each of a revolution number setting means (NSET) 112 which detects the operation position of an accelerator pedal or the like, a position sensor (RACT) 113 of the actuator 16 for controlling the amount of fuel to be injected, a position sensor (AACT) 114 of the actuator 11 for controlling the fuel injection timing, a temperature sensor (MTEP) 115 which detects the temperature of cooling water and a vacuum sensor (BSEN) 116 which detects the intake vacuum. The A/D converter 108 comprises a multiplexor (MPX) 109 which receives the input designation of an analog input from the CPU 100 for selection of an input terminal, a converter circuit (ADC) 110 which converts the received analog data into digital data and a register (REG) 111 which holds the converted data.

The revolution number of the engine is detected in a revolution number measuring circuit (NET) 117, which comprises a register (RPM-W) 118 which sets the revolution number measuring time, and a register (RPM-N) 119 which counts the number of pulses entering from a revolution sensor (NACT) 120 within the time set by the register (PRM-W) 118 and holds the previously counted number until the count data is updated. Accordingly, if the number of pulses per revolution is already known, the revolution number can be calculated from the number of pulses within the time set in the register (RPM-W) 118.

The present system adopts such a method that necessary operational processing is conducted at given intervals for the purpose of carrying out integral operations and smoothing the control of the whole of the system. Accordingly, there is a need for a timer circuit (INT) 121, which comprises an interval register (INTV) 122. The operational processing intervals of programs are determined by the data written in the interval register (INTV) 122 by the CPU 100. In other words, the interval register (INTV) 122 counts given clocks, and when the count data coincides with the data written in the interval register (INTV) 122, the CPU 100 is interrupted. The interruption causes the soft timer in a program to be updated, and the prescribed program processing is carried out.

A one-bit digital signal from each of a starter switch (START-SW) 126, an air-conditioner switch (AIR-SW) 127 and an idling switch (IDLE-SW) 128 and the like is applied to a discrete input/output circuit (DIOC) 123, which comprises an input/output deciding register (DDR) 124 and an interface (DIO) 125.

Duty pulses are employed as the signals applied to the actuators 16, 11. A spacing determining register ($SLOW_1$) 129 is used for determining the pulse spacing with respect to the actuator 16, while a spacing determining register ($SLOW_2$) 131 is used with respect to the actuator 11. In addition, a duty amount determining register (SLOD$_1$) 130 and a duty amount determining register (SLOD$_2$) 132 are employed for determining the duty amounts respectively. The duty amounts are determined by writing data in the duty amount determining registers (SOLD$_1$) 130 and (SOLD$_2$) 132 respectively. The output from each of the registers (SLOW$_1$) 129, (SLOW$_2$) 131, (SLOD$_1$) 130 and (SLOD$_2$) 132 is blocked by a mode register (MODE) 133 from the starting of the engine to the completion of setting an initial value and added to the drive circuit 104 after the completion of setting the initial value.

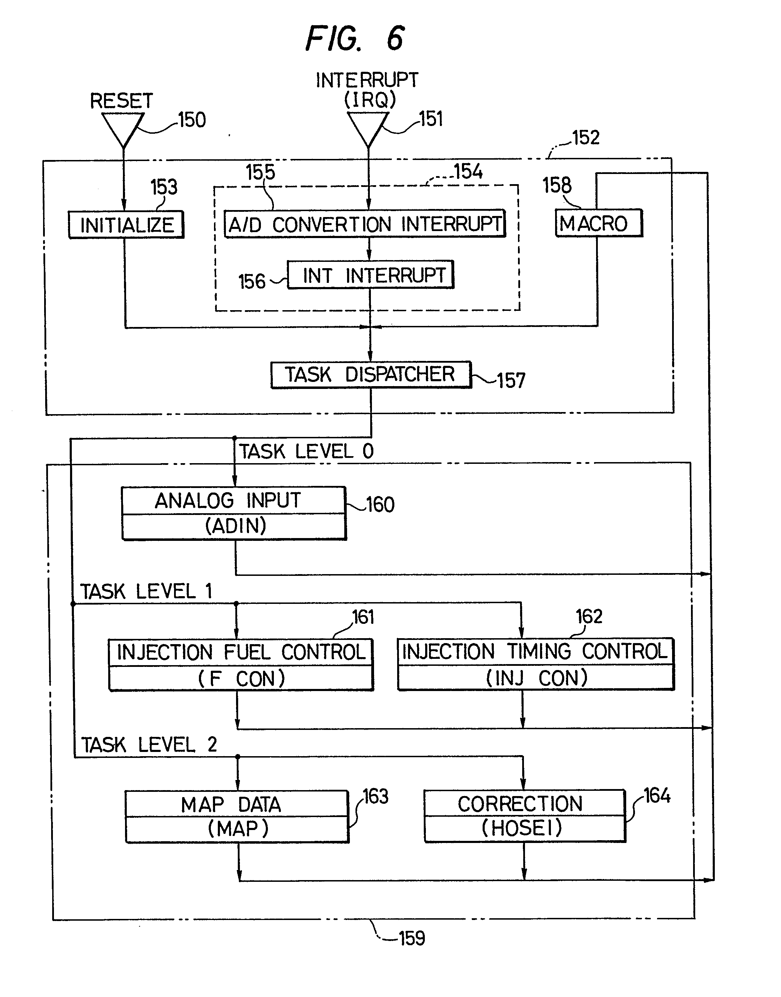

Fig. 6 shows a program system for practicing the fuel injection control according to the present invention.

First, an operating system 152 of the system will be described hereinunder.

Program processing is started in response to a RESET signal 150, and an initial processing program 153 is started. The initial processing program 153 performs the following processing: clearing the stored content of the RAM 102; setting the initial value of each of the registers in the I/O circuit 103; taking in input data for conducting pre-editing necessary for controlling the engine; and the like.

When there is an interruption (IRQ) 151, the interruption factor is analyzed according to a processing program 154 and a request for starting a necessary task in a task group 159 is delivered to a task dispatcher 157. An A/D conversion-interruption processing program 155 performs input designation to the multiplexor (MPX) 109 in the A/D converter 108 and at the same time, converts the input-designated analog quantity into a digital quanity in the converter circuit (ADC) 110, and carries out processing so that an interruption is made on completion of the A/D conversion. An initial interruption processing program 156 carries out processing of the timer interruption at the interval set in the interval register (INTV) 122 according to the initial processing program 153 and effects such control that the starting request of the task to be started is delivered to the task dispatcher 157 at a given interval.

Each of the tasks in the task group 159 is given a task number representing the priority order and belongs to one of levels 0 - 2.

Among the tasks at level 0 is an analog input processing (ADIN) task 160, among the tasks at level 1 are an injection fuel amount control (FCON) task 161 and a fuel injection timing control (INJCON) task 162, and among the tasks at level 2 are a map data processing (MAP) task 163 and a correction processing (HOSEI) task 164.

On completion of these tasks, completion is reported to the task dispatcher 157 according to a macroprocessing program 158.

The processing by each of the tasks will be described hereinunder. The description of the analog input processing (ADIN) task 160 is omitted, because it does not directly relate to the present invention.

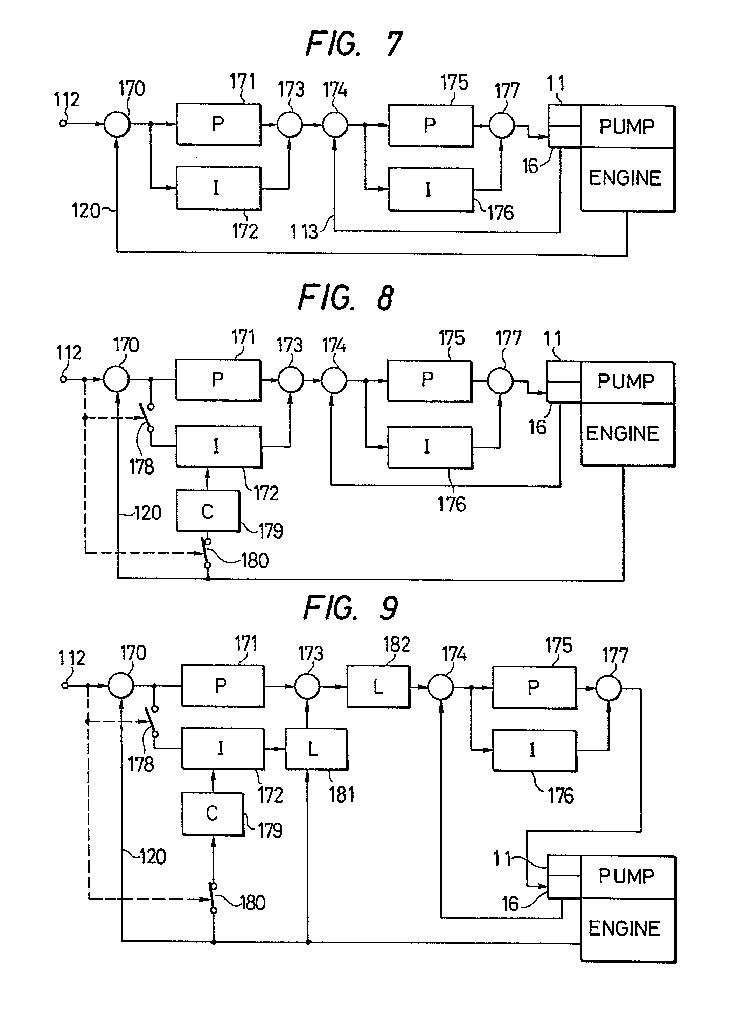

The injection fuel amount control task 161 will be described hereinunder with reference to Fig. 7 thru Fig. 9.

In Fig. 7, first, a comparator (including a differential amplifier) 170 finds a difference between the desired revolution number signal from the revolution number setting means (NSET) 112 determined according to the opening of the accelerator pedal or the like and the actual revolution number determined by the revolution sensor (NACT) 120. The difference is fed to a proportioning device 171 and an integrator 172 in order to carry out proportional and integral operations respectively, and then the results are added in an adder 173.   The added signal is a desired injection fuel amount signal.   On the other hand, a comparator (including a differential amplifier) 174 finds a difference between the signal from the position sensor (RACT) 113 detecting the actual position of the actuator 16 for controlling the amount of fuel to be injected and the desired injection fuel amount signal. The difference is fed to an proportioning device 175 and an integrator 176 in order to carry out proportional and integral operations respectively. Then, the results are added in an adder 177.   The added signal is the corrected signal finally applied to the actuator 16.   In response to the signal, the amount of fuel injected by the injection pump is varied.

When the gain of the system is set so as to be stable, the position of the actuator 16 is determined so that the desired revolution number and the actual revolution number coincide with each other.   The system is suitable for operations of constant desired revolution numbers, e.g., idling after warming up.

Fig. 6 discloses a control method in a normal operation. An electronic switch 178 is provided between the comparator 170 and the integrator 172, and adapted to be closed when the signal from the revolution number setting means (NSET) 112 is at below a given level, e.g., in idling. Moreover, the integrator 172 is adapted to be fed with the signal from a designator 179, which is connected to the revolution sensor (NACT) 120 through an electronic switch 180. The electronic switches 178 and 180 are adapted to be reversible. In idling, the electronic switch 178 is ON, while the electronic switch 180 is OFF, thereby to perform a similar operation to that of the system shown in Fig. 5. On the other hand, in a normal operation, the electronic switch 178 is OFF, while the electronic switch 180 is ON, so that the injection fuel amount signal in a no-load operation is applied to the integrator 172 from the designator 179. Thereby, a difference is provided between the signal levels of the revolution number setting means (NSET) 112 and the revolution sensor (NACT) 120 respectively in order to prevent the injection fuel amount from becoming too small and thereby to prevent drivability from being damaged. The difference, needless to say, corresponds to the load of the engine.

Fig. 9 discloses a control method in decelerating and high-load operations. An integration limiter 181 is provided between the integrator 172 and the adder 173, and moreover, an addition limiter 182 is provided between the adder 173 and the comparator 174.

The integration limiter 181 and the addition limiter 182 place a positional limitation on the desired position of the actuator 16 for controlling the amount of fuel to be injected. In other words, the limiters control the maximum amount of fuel to be injected of the engine and hold the idling revolution in a sudden deceleration.

In this system, such a program is prepared as controlling the whole system shown in Fig. 9.

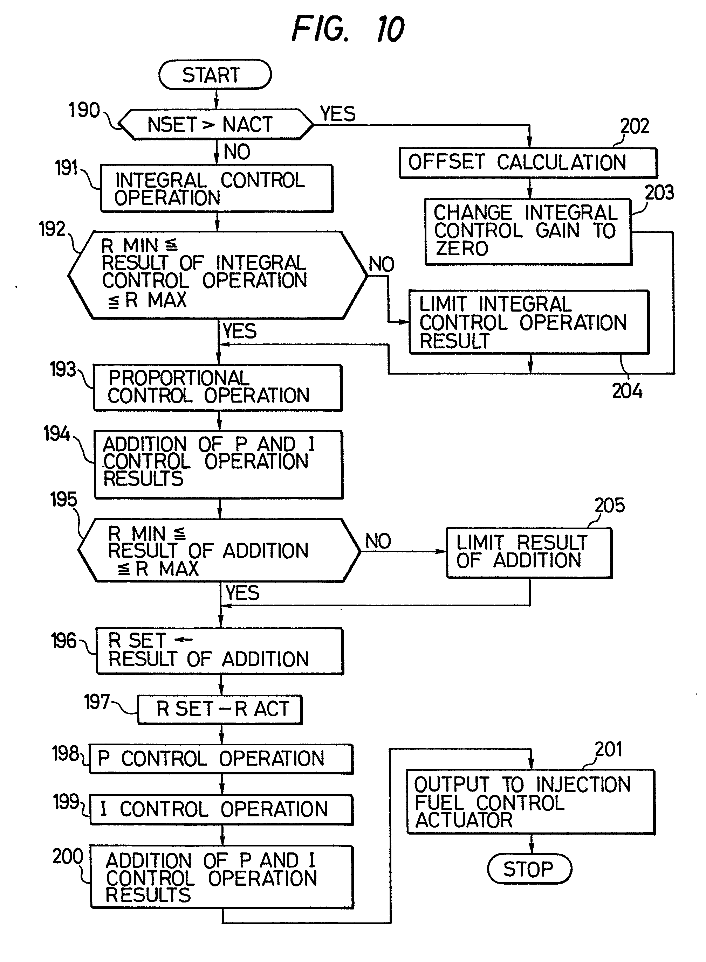

The control method will be described hereinunder according to the block diagram shown in Fig. 9 and the flow chart shown in Fig. 10.

First, in idling, the signal levels of the revolution number setting means (NSET) 112 and the revolution sensor (NACT) 120 respectively are compared with each other in a step 190, thereby to judge whether or not the revolution number at that time is larger than the idling revolution number. When the operation is judged to be in an idling state in the step 190, the difference obtained by the comparator 170 is integrated in a step 191. When the operation result is between the position of a maximum injection fuel amount signal RMAX and that of a minimum injection fuel amount signal RMIN of the limit data of the integration limiter 181 in a step 192, the result is added to the proportional portion calculated by the proportioning device 171 in a step 194. The addition is carried out in the adder 173. When the value added in the adder 173 is between the position of the maximum injection fuel amount signal RMAX and that of the minimum injection fuel amount signal RMIN of the limit data of the addition limiter 182 in a step 195, the addition result is determined to be the level of a control signal RSET in a step 196. Next, the comparator 174 finds the difference between the level of the control signal RSET and that of the signal from the position sensor RACV 113 in a step 197. The difference is multiplied by a constant in the proportioning device 195 in a step 198 and integrated by the integrator 176 in a step 199. The results are added by the adder 177 in a step 200, and then the correction signal finally applied to the actuator 16 for controlling the amount of fuel to be injected is delivered in a step 201.

Next, in case of a normal operation, when the operation is judged to be normal in the step 190, the switch 178 is turned off, while the switch 180 is turned on, thereby allowing the designation value of the designator 179 to be applied to the integrator 172. This is performed in steps 202, 203. Here, the OFFSET signal calculation carried out in the step 202 is practiced according to map data, described later. On completion of the step 203, the step moves to the step 193, and then the operations in the steps 194 thru 201 are performed as described above.

Next, when the integral operation result is larger than the maximum injection fuel amount signal RMAX or smaller than the minimum injection fuel amount signal RMIN in the step 192, the integral operation result is limited in a step 204. Namely, the maximum injection fuel amount signal RMAX or the minimum injection fuel amount signal RMIN is set, and the step moves to the step 193.

Also in the step 195, when the addition result is larger than the maximum injection fuel amount signal RMAX or smaller than the minimum injection fuel amount signal RMIN, the addition result is limited in a step 205, and after the maximum injection fuel amount signal RMAX or the minimum injection fuel amount signal RMIN is set, the step moves to the step 196.   This is effective to determine a maximum amount of fuel to be injected and a minimum amount of fuel to be injected.   This is also carried out according to map data representing the maximum injection fuel amount and the minimum injection fuel amount, described later.

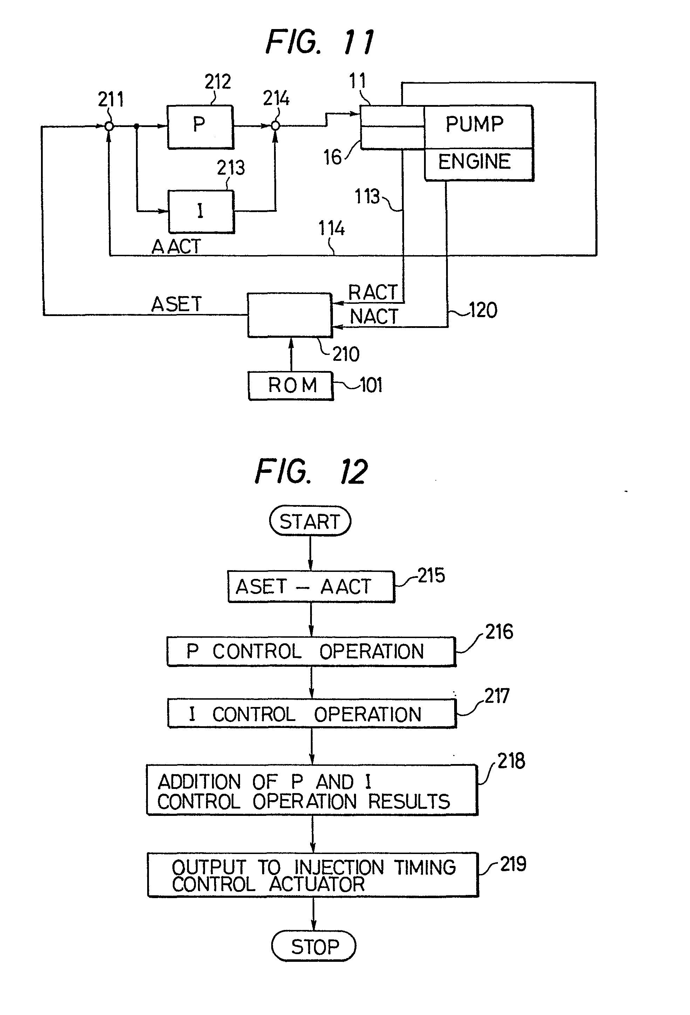

The fuel injection timing task 162 will be described hereinunder with reference to Fig. 11.

Although the fuel injection timing is basically determined according to the revolution number, in fact, a more appropriate fuel injection timing is determined by employing the amount of fuel to be injected as a decision factor in addition to the revolution number.

In Fig. 11, fed to a fuel injection timing determining device 210 are the revolution number signal from the revolution sensor (NACT) 120 and the actual injection fuel amount signal from the position sensor (RACT) 113 of the actuator 16 for controlling the amount of fuel to be injected. The fuel injection timing determining device 210 reads out a proper fuel injection timing data from the ROM 101 in response to the revolution number signal and the actual injection fuel amount signal, and delivers the data as the fuel injection timing control signal ASET.

The fuel injection timing control signal ASET is compared with the actual fuel injection timing signal from the position sensor AACT of the actuator 11 for controlling the fuel injection timing in a comparator 211, which finds a difference therebetween. The difference is proportioned and integrated at a proportioning device 212 and an integrator 213. Then, the results are added by an adder 214, and the actuator 11 for controlling the fuel injection timing is controlled so that the level of the fuel injection timing control signal ASET and that of the signal from the position sensor AACT coincide with each other.

The above-mentioned processing will be described hereinunder according to the flow chart shown in Fig. 10.

The levels of the fuel injection timing control signal ASET and the signal from the position sensor AACT 114 are compared with each other in a step 215. The difference therebetween is multiplied by a constant in a step 216 and integrated in a step 217. After the results are added in a step 218, a fuel injection timing control signal is generated in a step 219. The fuel injection timing is varied by applying the signal to the actuator 11 for controlling the fuel injection timing.

The map data processing task 163 will be described hereinunder.

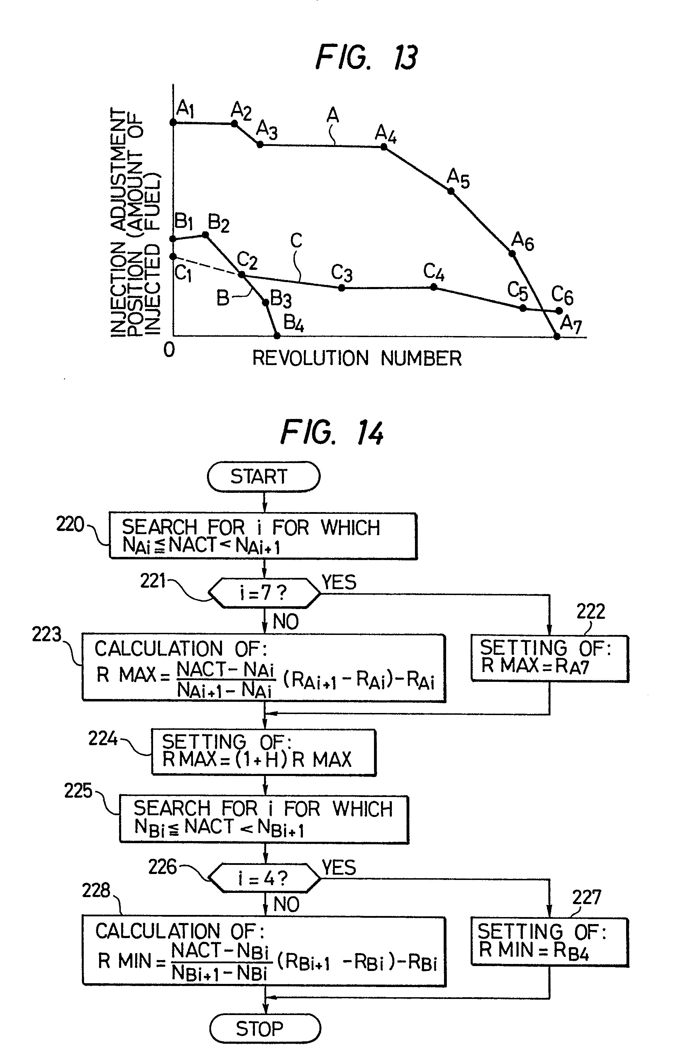

Fig. 13 shows the change in the relationship between the engine revolution number and the injection adjustment position (corresponding to the amount of injected fuel) when the engine is in a loaded state. A curve A shows the change of the maximum amount of injected fuel, a curve B shows the change of the minimum amount of injected fuel for prevention of an engine failure when the engine is suddenly decelerated from a high-revolution region, and a curve C shows the change of an OFFSET signal applied to the designator 179 in a normal operation, i.e., the amount of injected fuel in a no-load operation.   These curves are stored in the ROM 101 as digital quantities respectively.   For example, the coordinate values at points $A_1$ - $A_7$ on the curve A, i.e., the values of the amounts of injected fuel at certain revolution numbers (R.P.M.) are stored in the ROM 101 as map data respectively.   The same is the case with the coordinate values of points $B_1$ - $B_4$ on the curve B and the coordinate values of points $C_1$ - $C_6$ on the curve C.

Here, for convenience of description, the values of $A_1$ - $A_7$ are represented by $A_i(N_{Ai}, R_{Ai})$, the values of $B_1$ - $B_4$ are represented by $B_i(N_{Bi}, R_{Bi})$, and the values of $C_1$ - $C_6$ are represented by $C_i(N_{Ci}, R_{Ci})$.

Fig. 14 shows a flow chart for obtaining the maximum injection fuel amount signal RMAX and the minimum injection fuel amount signal RMIN by employing these map data and according to the detected actual revolution number NACT.

In Fig. 14, steps 220 - 224 constitute a flow for obtaining the maximum injection fuel amount signal RMAX, while step 225 - 228 constitute a flow for obtaining the minimum injection fuel amount signal RMIN. In the step 220, retrieval is carried out for finding where the detected revolution number signal NACT is between $N_{A1}$ - $N_{A7}$, thereby to determine the value of i. When i is judged to be 7 in the step 221, $R_{A7}$ is set as the maximum injection fuel amount signal RMAX in the step 222. When i is not judged to be 7, an operation is carried out according to interpolation in the step 223, thereby to obtain the maximum injection fuel amount signal RMAX. In the step 224, the value of the maximum injection fuel amount signal RMAX is corrected by employoing a correction coefficient H in consideration of the effect of the intake air pressure. The description of H will be set forth later. Similarly to the derivation of the maximum injection fuel amount signal RMAX, in the step 225, retrieval is carried out for finding where the detected revolution number NACT is between $N_{B1}$ - $N_{B4}$, thereby to determine the value of i. When i is judged to be 4 in the step 226, $R_{B4}$ is set as the minimum injection fuel amount signal RMIN in the step 227. When i is not judged to be 4, an operation is carried out according to interpolation in the step 228, thereby to determine the value of the minimum injection fuel amount signal RMIN.

Moreover, the operation for deriving the OFFSET signal is carried out in a similar manner to the derivation of the maximum injection fuel amount signal RMAX shown in the steps 220 - 224. In case of calculation of the OFFSET signal, however, a correction coefficient HO according to the engine temperature is employed instead of the correction coefficient H. The description of HO will be set forth later.

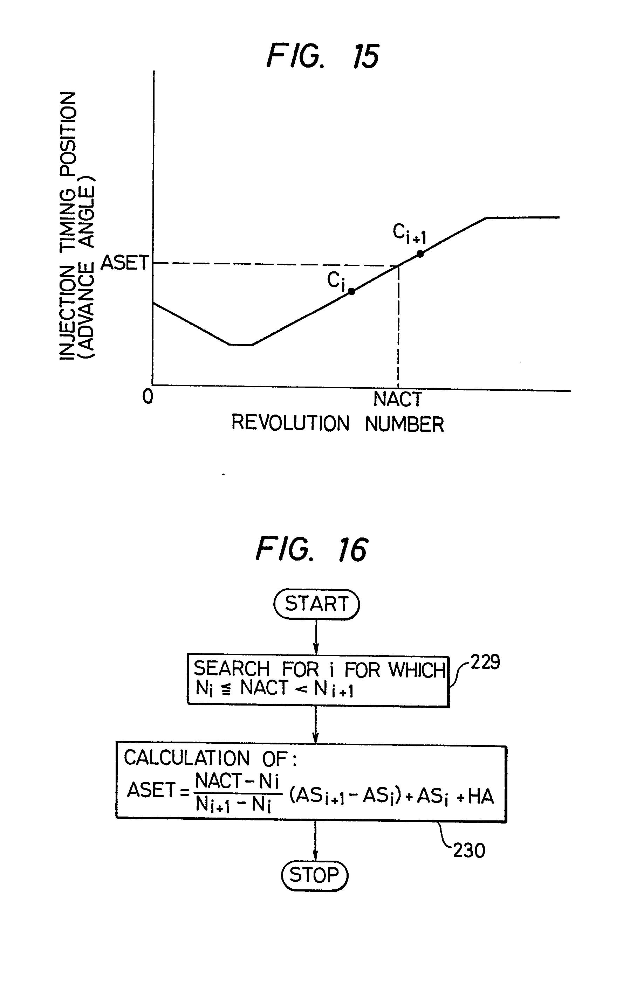

Fig. 15 shows map data about the relationship between the engine revolution number N and the fuel injection timing control position (corresponding to the advance angle) AS. Also the map data are stored in the ROM as digital quantities. The flow chart shown in Fig. 16 illustrates a method for obtaining the fuel injection timing ASET from the map data shown in Fig. 15 according to the detected actual revolution number NACT.

Here, in convenience of description, a set of i-th data is represented by $C_i(N_i, AS_i)$, and the detected actual revolution number NACT is supposed to be between $N_i$ and $N_{i+1}$.

In Fig. 16, i is determined in a step 229, and the fuel injection timing ASET is obtained according to interpolation in a step 230.

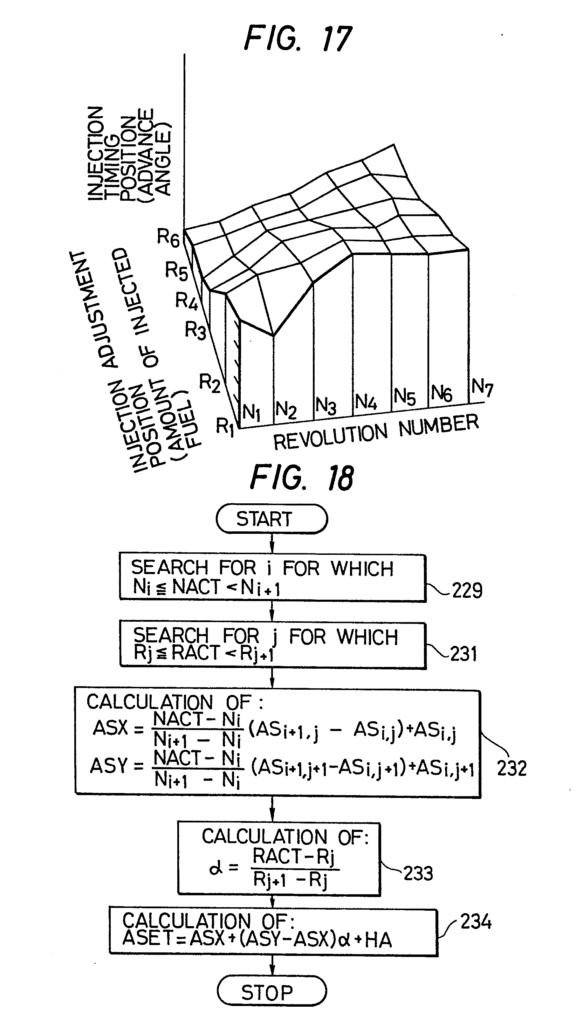

Fig. 17 shows map data about the relationship among the revolution number, the amount of injected fuel and the fuel injection timing in case of employing the amount of injected fuel for determination of the fuel injection timing in addition to the engine revolution number. The map data shown in Fig. 17 is three dimensional. Fig. 18 shows a flow chart for obtaining the fuel injection timing according to the detected actual engine revolution number NACT and the actual amount of injected fuel RACT. Here, in convenience of description, an arbitrary set of map data is represented by ($N_i$, $R_i$, and $AS_{i,j}$). Namely, $AS_{i,j}$ is the fuel injection timing data corresponding to the revolution number data $N_i$ and the amount of injected fuel $R_j$. The reference character i designates the order of the data on the revolution number, while j denotes the order of the data on the amount of injected fuel. These map data are stored in the ROM as digital quantities. In the step 229, retrieval of i is carried out according to the detected actual engine revolution number NACT, while in a step 231, retrieval of j is carried out according to the actual amount of injected fuel RACT. As a result, data necessary for interpolation calculation are retrieved. An interpolation calculation is carried out according to the detected actual engine revolution number NACT in a step 232, and an interpolation calculation is carried out according to the actual amount of injected fuel RACT in each of steps 233, 234, thereby to obtain the fuel injection timing signal ASET.

The correction processing task 164 will be described hereinunder.

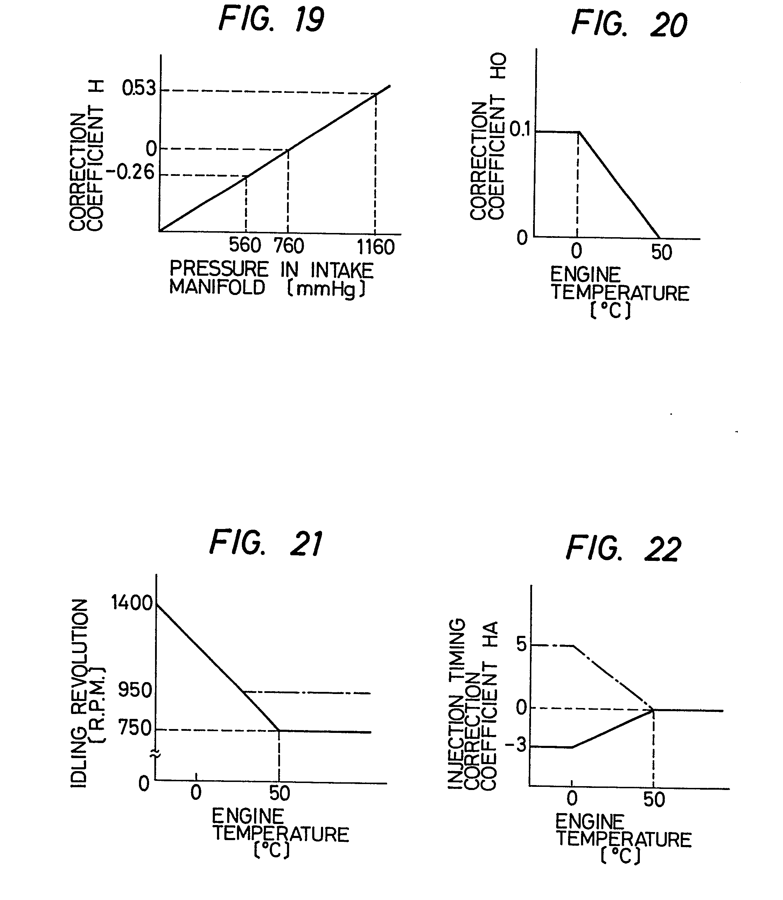

Fig. 19 shows the change of the correction coefficient H of the maximum injection fuel amount signal RMAX due to the intake air pressure. In fact, the intake air pressure is made known by detecting the flow rate of intake air, and the maximum injection fuel amount signal RMAX is corrected according to the correction coefficient H corresponding to the value of the intake air pressure. The correction coefficient H is employed in the step 224 in Fig. 14.

Fig. 20 shows the relationship between the engine temperature and the correction coefficient HO of the amount of fuel injected in a no-load operation. The correction coefficient HO is used to correct the value of the OFFSET signal obtained by employing map data so that the following relationship is obtained: the lower the engine temperature, the larger the amount of fuel to be injected. The correction coefficient HO corresponds to the correction coefficient H of the maximum injection fuel amount signal RMAX.

In Fig. 21, the solid line shows the relationship between the engine temperature and the set value of the idling revolution number. When the engine temperature is low, the idling revolution number is set so as to be maintained rather high. The dash and dotted line in the figure shows the set value of the idling revolution number when an air conditioner is used. The set value of the idling revolution number in Fig. 21 is employed as the value of the desired revolution number signal NSET in the step 190 shown in Fig. 10.

Fig. 22 shows the relationship between the engine temperature and a correction value HA for the fuel injection timing. The solid line in the figure represents the correction value in operation, while the broken line represents the that at starting of the engine. The correction value HA is employed in the step 230 shown in Fig. 16 and in the step 234 shown in Fig. 18. By the correction, the noise level is lowered in operation, and the starting property of the engine is improved.

As will be fully understood from the foregoing description, according to the present invention, it is possible to smoothly and accurately control the injection of fuel, since parameters for controlling the amount of fuel to be injected and the fuel injection timing are derived from the fuel injection command from the accelerator pedal and the operation parameters fed back from the engine, and control quantities are calculated from the operation parameters, and then the actuators are controlled so that there are no differences between the actually controlled quantities fed back from the actuators and the calculated control quantities respectively.

Moreover, in the present invention, the fuel injection timing is controlled in addition to the amount of fuel to be injected, so that the amount of generated black smoke is regulated according to the fuel injection timing.  Accordingly, it is possible to control the amount of black smoke so as to be less than an allowable value, thereby allowing the output torque of the engine to increase 20 - 50%.

Furthermore, since the control parameters are determined according to map data, it is possible to simply change the set values of the maximum amount of fuel to be injected, the minimum amount of fuel to be injected, the optimum fuel injection timing and the like by rewriting the contents of the map data.

- 1 -

0075802

WHAT IS CLAIMED IS:

1. A method for controlling a fuel injection pump, characterized by

a first step of taking in an external command for acceleration and deceleration and taking in at least one operation parameter of an engine;

a second step of deriving a first control parameter for most suitably controlling a first actuator which sets the amount of fuel to be injected, according to the external command and the operation parameter;

a third step of calculating a first control quantity according to the first control parameter, the first control quantity controlling the first actuator (16); and

a forth step of correcting the first control quantity according to an actually controlled quantity which is detected by a position sensor (43-48) of the first actuator (16).

2. A method for controlling a fuel injection pump according to claim 1, further characterized by

a fifth step of deriving a second control parameter for most suitably controlling a second actuator which sets fuel injection timing,
according to the first control parameter of said second step and the operation parameter;

a sixth step of calculating a second control quantity according to the second control parameter, the second control quantity controlling the second actuator (11); and

a seventh step of correcting the second control quantity according to an actually controlled quantity which is detected by a position sensor of the second actuator (11).

3. An apparatus for controlling a fuel injection pump for an internal combustion engine, characterized by

a first electric actuator (16) for controlling amount of fuel to be injected from said fuel injection pump;

a means (103) for detecting at least one operation parameter (112-116) of said internal combustion engine;

a means (100-103) for deriving at least one control parameter based on at least one signal from said means for detecting at least one operation parameter;

a means (100-103; 114) for operating a control quantity for said first electric actuator (16) according to the control parameter;

a means (113) for detecting an output (120) from said first electric actuator; and

a means for correcting the control quantity from the control quantity operating means, in such a manner that the output from said first electric actuator is equalized to the control quantity from said control quantity operating means (104).

4. An apparatus for controlling a fuel injection pump according to claim 3, further characterized by

a second electric actuator (11) for controlling fuel injection timing of said fuel injection pump; and

a means (100-103; 114) for detecting an output from said second electric actuator;

wherein said second electric actuator (11) is controlled by said means for correcting the control quantity in such a manner that the output from said second electric actuator (11) is equalized to the control quantity from said control quantity operating means.

5. An apparatus for controlling a fuel injection pump according to claim 4, characterized in that the fuel injection timing of said second electric actuator (11) is determined according to the amount of fuel to be injected from said first electric actuator.

6. An apparatus for controlling a fuel injection pump according to one of claim 3 to 5, characterized in that the control quantity is determined according to map data stored in a memory in said means for deriving at least one control parameter.

7. An apparatus for supplying fuel to a fuel injector, characterized by

(1) a fuel pump having;

(a) a delivery valve (19) connected to an injection valve, said delivery valve being adapted to open when fuel pressure reaches a predetermined value,

(b) a plunger (5) reciprocated by a cam (1) rotating in synchronism with engine revolution, said plunger having an internal passage (5A) that forms a high pressure chamber together with said delivery valve (19),

(c) a spill ring (6) slidably and rotatably mounted on an outer surface of said plunger (5) in order to change area of a notch formed on said plunger communicating with said internal passage (5A) and thereby to determine the amount of fuel to be injected,

(2) a lever (9) for rotating and sliding said spill ring (6);

(3) an electromagnetic actuator (11, 16) having;

(d) an electromagnetic coil (36),

(e) an armature (31, 32) connected to said lever (9) and changing its position when said electromagnetic coil (36) is energized;

(4) a position sensor (43-48) assembled together

- 5 -

0075802

with said electromagnetic actuator and converting displacement of said armature into an electrical signal;

(5) a computer (100-133) for controlling current which is supplied to said electromagnetic coil, said computer taking in an electrical signal from said position sensor (43-48) in order to correct the current;

whereby said electromagnetic actuator is electrically controlled.

## FIG. 1

## FIG. 2

## FIG. 3

DISPLACEMENT
OF
PLUNGER

FIG. 4

# FIG. 5

0075802

# FIG. 6

INTERRUPT
(IRQ)

RESET —150        —151        —152

153        155        —154        158

| INITIALIZE | A/D CONVERTION INTERRUPT | MACRO |

156 — INT INTERRUPT

TASK DISPATCHER —157

TASK LEVEL 0

ANALOG INPUT —160
(ADIN)

TASK LEVEL 1

INJECTION FUEL CONTROL        161        INJECTION TIMING CONTROL        162
( F CON )                         (INJ CON)

TASK LEVEL 2

MAP DATA —163        CORRECTION —164
(MAP)                     (HOSEI)

—159

**FIG. 7**

**FIG. 8**

**FIG. 9**

# FIG. 10

```
                    ( START )
                        │
190 ─┐          ┌───────────────┐   YES
     └─────────<   NSET > NACT    >──────────────────────┐
                └───────────────┘                        │
                        │ NO                              ▼
191 ─┐          ┌───────────────┐            ┌──────────────────────┐ 202
     └──────────│ INTEGRAL CONTROL│           │ OFFSET CALCULATION    │
                │ OPERATION       │           └──────────────────────┘
                └───────────────┘                        │
                        │                                ▼
192 ─┐          ┌───────────────┐            ┌──────────────────────┐ 203
     │         <  R MIN ≦         >           │ CHANGE INTEGRAL       │
     └──────────  RESULT OF INTEGRAL  NO      │ CONTROL GAIN TO       │
                  CONTROL OPERATION ─────┐    │ ZERO                  │
                  ≦ R MAX            │    │    └──────────────────────┘
                └───────────────┘    │    │              │
                        │ YES        │    ▼
                        │            │  ┌──────────────────────┐
193 ─┐          ┌───────────────┐    │  │ LIMIT INTEGRAL         │
     └──────────│ PROPORTIONAL    │    │  │ CONTROL OPERATION      │
                │ CONTROL OPERATION│◄──┘  │ RESULT                │
                └───────────────┘         └──────────────────────┘
                        │                            204
194 ─┐          ┌───────────────┐
     └──────────│ ADDITION OF P AND I│
                │ CONTROL OPERATION │
                │ RESULTS           │
                └───────────────┘
                        │
195 ─┐          ┌───────────────┐            ┌──────────────────────┐ 205
     │         <  R MIN ≦         >   NO       │ LIMIT RESULT          │
     └──────────  RESULT OF ADDITION ─────────►│ OF ADDITION           │
                  ≦ R MAX            │          └──────────────────────┘
                └───────────────┘                        │
                        │ YES                            │
                        │◄───────────────────────────────┘
196 ─┐          ┌───────────────┐
     └──────────│ R SET ←          │
                │ RESULT OF ADDITION│
                └───────────────┘
                        │
197 ─┐          ┌───────────────┐
     └──────────│ R SET − R ACT   │
                └───────────────┘
                        │
198 ─┐          ┌───────────────┐
     └──────────│ P CONTROL OPERATION│
                └───────────────┘
                        │                    ┌──────────────────────┐ 201
199 ─┐          ┌───────────────┐            │ OUTPUT TO INJECTION   │
     └──────────│ I CONTROL OPERATION│        │ FUEL CONTROL          │
                └───────────────┘            │ ACTUATOR              │
                        │                    └──────────────────────┘
200 ─┐          ┌───────────────┐                        │
     └──────────│ ADDITION OF P AND I│                   ▼
                │ CONTROL OPERATION │                 ( STOP )
                │ RESULTS           │
                └───────────────┘
                        │
                        └──────────────────────►
```

## FIG. 11

## FIG. 12

## FIG. 13

## FIG. 14

```
                    ( START )
                        │
220 ─  SEARCH FOR i FOR WHICH
       N_Ai ≦ NACT < N_Ai+1
                        │
221 ─      < i = 7 ? > ──YES──┐
                │              │
               NO             │
                │             222 ─ SETTING OF:
223 ─ CALCULATION OF:               R MAX = R_A7
      R MAX = ...                    │
                        ├────────────┘
                        │
224 ─ SETTING OF:
      R MAX = (1+H) R MAX
                        │
225 ─ SEARCH FOR i FOR WHICH
      N_Bi ≦ NACT < N_Bi+1
                        │
226 ─      < i = 4? > ──YES──┐
                │              │
               NO             227 ─ SETTING OF:
                │                    R MIN = R_B4
228 ─ CALCULATION OF:                │
      R MIN = ...                     │
                        ├────────────┘
                        │
                    ( STOP )
```

Block 223:
$$R\ MAX = \frac{NACT - N_{Ai}}{N_{Ai+1} - N_{Ai}}(R_{Ai+1} - R_{Ai}) - R_{Ai}$$

Block 228:
$$R\ MIN = \frac{NACT - N_{Bi}}{N_{Bi+1} - N_{Bi}}(R_{Bi+1} - R_{Bi}) - R_{Bi}$$

# FIG. 15

# FIG. 16

## FIG. 17

## FIG. 18

```
START
```

SEARCH FOR i FOR WHICH
$N_i \leqq NACT < N_{i+1}$ ——229

SEARCH FOR j FOR WHICH
$R_j \leqq RACT < R_{j+1}$ ——231

CALCULATION OF :
$$ASX = \frac{NACT - N_i}{N_{i+1} - N_i}(AS_{i+1,j} - AS_{i,j}) + AS_{i,j}$$
$$ASY = \frac{NACT - N_i}{N_{i+1} - N_i}(AS_{i+1,j+1} - AS_{i,j+1}) + AS_{i,j+1}$$ —232

CALCULATION OF:
$$\alpha = \frac{RACT - R_j}{R_{j+1} - R_j}$$ ——233

CALCULATION OF:
$ASET = ASX + (ASY - ASX)\alpha + HA$ ——234

```
STOP
```

0075802

## FIG. 19

CORRECTION COEFFICIENT H

0.53
0
-0.26

560 760 1160

PRESSURE IN INTAKE MANIFOLD [mmHg]

## FIG. 20

CORRECTION COEFFICIENT HO

0.1

0

0 50

ENGINE TEMPERATURE [°C]

## FIG. 21

IDLING REVOLUTION [R.P.M.]

1400

950
750

0

0 50

ENGINE TEMPERATURE [°C]

## FIG. 22

INJECTION TIMING CORRECTION COEFFICIENT HA

5

0

-3

0 50

ENGINE TEMPERATURE [°C]